# EUROPEAN PATENT APPLICATION

(11) **EP 1 717 121 A1**
(43) Date of publication of application: **02.11.2006**
(21) Application number: 06252252.9
(22) Date of filing: 27.04.2006
(51) Int. Cl.: B60T 8/17, B60T 8/88

(54) **Vehicle power and communication bus and system**

(30) Priority: 28.04.2005 US 116613
(71) Applicant: DANA CORPORATION, Toledo, OH 43615 (US)
(72) Inventor: Claussen, Stephen P., Richland, Michigan 49083 (US); McCann, Gerard O., Kalamazoo, Michigan 49009 (US); Simma, Thomas F., Terre Haute, Indiana 47802 (US)
(74) Representative: Cheyne, John Robert Alexander M.

(57) **Abstract**

The present invention relates to an electrical power and communication bus system for a truck, a tractor, or a tractor with a trailer and an associated bogie, where the electrical power and communication bus system reside in an anti-lock brake system (ABS) module (21) that is disposed on the truck, the tractor, or the bogie of the trailer. The bus system comprises a bus controller (30), which utilizes a bus protocol, at least one bus connector (29) that is electrically connected to a processor in the ABS, a source of power, and at least one auxiliary system (40b;31a,31b,32) that is electrically connected to the bus connector (29).

## Description

### FIELD OF THE INVENTION

The present invention relates to a vehicle electrical power and communication bus and system. More particularly, the present invention relates to a vehicle electrical power and communication bus and system associated with an anti-lock brake system.

### BACKGROUND OF THE INVENTION

Those skilled in the art know that a vehicle, such as a truck, a tractor, or a trailer in combination with a tractor, has at least one set of wheels with an associated suspension, and an anti-lock brake system (ABS).

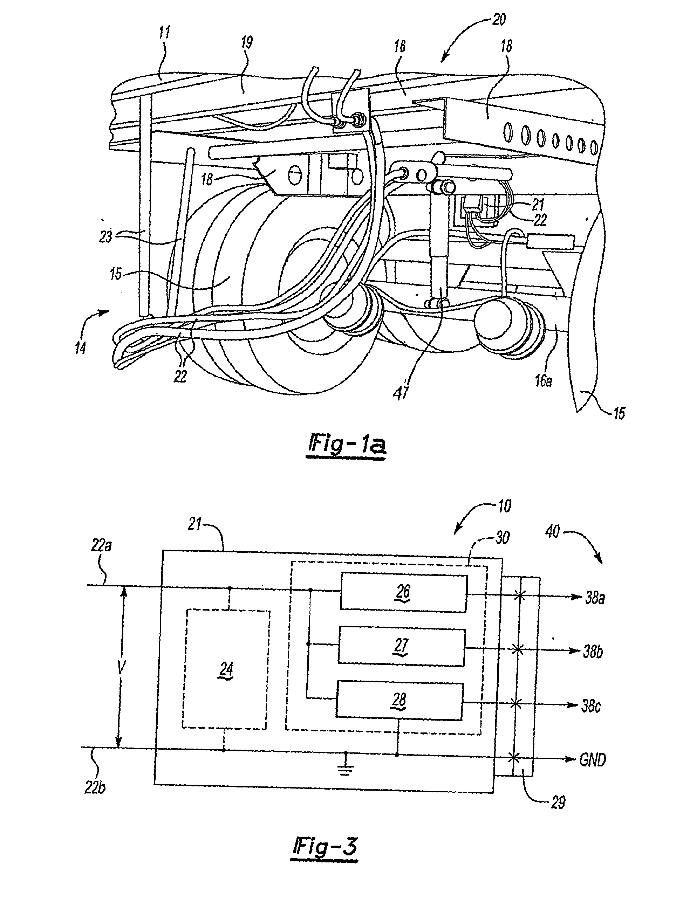

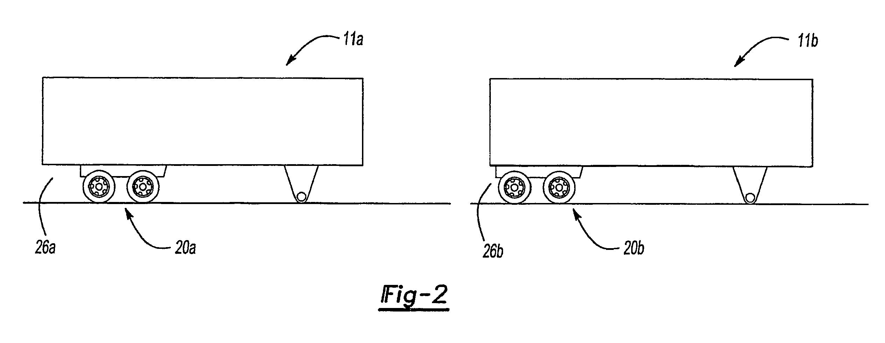

In the case of the trailer, the wheels and the suspension may be moved with respect to the trailer via a bogie. On the majority of new trailers in North America, the bogie is a component that slides along rails to various positions (see Figs. 1a and 2). Those positions are used, for example, to meet varying U.S. state-to-state regulations, to satisfy maximum trailer load conditions, and/or to allow for various loading and unloading safety requirements.

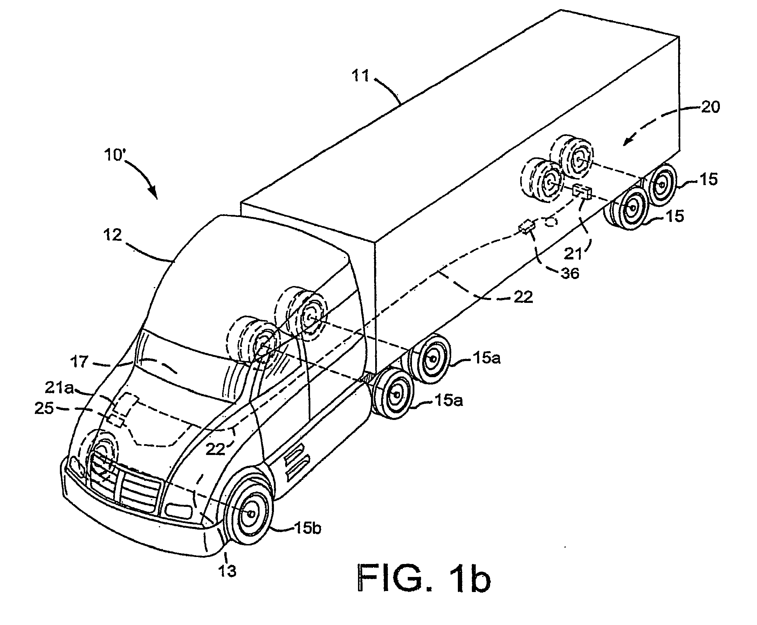

Typically, the bogie can span an overall slide displacement of approximately 8 feet. In order to accommodate this displacement, a bundle of pressurized air hoses and individual electrical cables are strung from the trailer to the bogie, typically, by way of suspension springs from below the trailer floor. These hoses and cables are normally used for direct control of the brakes and for powering an ABS module, which has been required in the United States on all trucks, tractors, and trailers since the 1990's. Typically, though not always, a connector is used where the cable bundle meets (see remote distribution point 36 in Fig. 1 b) toward the rear of the trailer at the trailer floor. Also, in the case of the trailer, there are 20 to 25 feet of electrical cable between the connector and the ABS module.

Frequently, a connector for power supply connectivity is not used at the ABS module itself because this connection is hard wired directly with no connector right at the module. In addition, ABS manufacturers discourage disruption of the ABS wiring connection and configuration due to concerns about possible degradation to the ABS, which is a safety critical system, and possibly for business advantage reasons. There is also a lack of standardization and/or ease of connectivity for any auxiliary systems, in and around the ABS module.

This lack of standardization and/or ease of connectivity has hampered currently available auxiliary systems and communication infrastructure implementations, from which the control of the truck, tractor, or trailer would benefit. In addition, these auxiliary systems add even more electrical cabling to an already cluttered bundle of hoses and cables, and may cause disablement of the ABS, for example, in the event of a short circuit in an auxiliary system.

Currently, a communication scheme known as PLC4TRUCKS (herein PLC) is available over existing ABS power wiring. However, safety critical and time sensitive control functions do not utilize a PLC link, which operates at a low speed (9600 Baud) and is relatively electrically fragile. Instead, PLC was developed to provide direct communication between, for example, the tractor and the trailer so that warning signals could be provided to the tractor/truck cab.

Basically, PLC is a rather expensive "power line carrier" scheme that utilizes a spread spectrum high frequency signal (in the order of 100kHz to 400kHz) for communicating ABS diagnostics (e.g., lighting a warning light in a tractor/truck cab) over existing power line wiring. It was also envisaged that the PLC would be used to communicate with other devices on the truck, tractor, or trailer. However, as stated above, tapping into the ABS connection scheme is difficult, or impossible for hardwired ABS modules.

Examples of relevant art, where electrical/electronic controls and power systems were added to truck, tractor, and/or trailer systems, are as follows. U.S. Patent No. 4,285,279 to Chiappetti teaches an electrical generating device, such as a generator, mechanically connected to an axle of a vehicle. By virtue of a mechanical connection to the axle, the generating device rotates and produces electricity. The generator transmits the power generated to a power take-off rail for distribution to the vehicle as needed.

U.S. Patent No. 5,178,403 to Kemner et al. generally describes a system for providing power to an "energy consumer" on a trailer pulled by a tractor, such as an anti-lock control system for the vehicle brakes. In one embodiment, a generator, driven by compressed air from a compressed air system of the vehicle, generates electricity to a storage battery or to the energy consumer directly. In another embodiment, the generator is powered by a flexible shaft connected to an axle of the vehicle.

U.S. Patent No. 5,314,201 to Wessels discloses a system for selectively engaging and disengaging pins from pin locking holes in a bogie. A control panel for the system is mounted just forward of the trailer's wheels. The control panel is provided with 12 volt DC electrical power via a 2-wire cable. The control panel is electrically connected to an electric 4-way air valve via an electric 3-wire cable and an air pressure switch by a 2-wire cable. Also, the control panel is electrically connected via 3-wire cables to position sensors mounted on each of the air cylinders.

U.S. Patent No. 5,716,071 to Stanley et al. teaches an electric motor connected to pins of a slider assembly of a bogie through a linkage. Rotation of the motor moves the pins in and out of holes in the rails of the slider assembly. A pin sensor coupled to the linkage detects whether the pins are in or out of the holes. A visual display is provided in the cab and is coupled to the pin sensor. As best seen in Stanley's Fig. 11, a front processor coupled to a vehicle power supply and a power relay are located in the cab. A pressure switch, coupled to the front processor, is also located in the cab. A rear processor, coupled to motor relays and a motor, is located on the trailer. The pin sensor is coupled to the rear processor and drive, and driven switches are coupled to the motor and also the rear processor.

Thus, a truck, a tractor, or a trailer may benefit from a more robust, a faster, a less expensive, and a more connectable means of powering and communicating between the truck, the tractor, or the trailer, and auxiliary controls and power systems.

### SUMMARY OF THE INVENTION

The present invention relates to an electrical power and communication bus for a truck, a tractor, or a trailer. The power and communication bus comprises a bus controller, which is disposed on the truck, the tractor, or the trailer, that utilizes a bus protocol. The bus controller is capable of electrically communicating switched power, protected power, and/or the bus protocol, with at least one auxiliary system.

Further advantages of the present invention will be apparent from the following description and appended claims, reference being made to the accompanying drawings forming a part of a specification, wherein like reference characters designate corresponding parts of several views.

### BRIEF DESCRIPTION OF THE DRAWINGS

Fig. 1a is a three dimensional view of a vehicle trailer bogie in accordance with the present invention;
Fig. 1b is a three dimensional view of a vehicle and a trailer that has the trailer bogie of Fig. 1a in accordance with the present invention;
Fig. 2 is a side view of two trailers where each trailer has the vehicle trailer bogie of Fig. 1a;
Fig. 3 is an electrical schematic of a power and communication bus system in accordance with the present invention;
Fig. 4 is a three dimensional view of a first electrical layout of the power and communication bus system of Fig. 3;
Fig. 5 is a three dimensional view of a second electrical layout of the power and communication bus system of Fig. 3;
Fig. 6 is an electrical schematic of an embodiment of the power and communication bus of Fig. 3; and
Fig. 7 is an electrical schematic of an embodiment of a slave node electrical circuit that is in communication with the embodiment of Fig. 6.

### DETAILED DESCRIPTION OF THE PREFERRED EMBODIMENTS

It is to be understood that the present invention may assume various alternative orientations and step sequences, except where expressly specified to the contrary. It is also to be understood that the specific devices and processes illustrated in the attached drawings, and described in the following specification are simply exemplary embodiments of the inventive concepts defined in the appended claims. Hence, specific dimensions, directions or other physical characteristics relating to the embodiments disclosed are not to be considered as limiting, unless the claims expressly state otherwise.

A particularly preferred embodiment of the present invention involves an electrical power and communication bus system 10 that is disposed in an ABS module 21 that is attached to a trailer bogie 20, as illustrated in Fig. 1a. The bogie 20 is shown having a frame member 16 that, in conjunction with at least the axle assembly 16a, help to support at least one set of wheels 15 and an attached suspension 14, which has, for example, suspension member 47, on a semi-trailer 11 associated with a tractor vehicle 12 that has a vehicle electronic control unit (ECU) 25. Typically, in the United States, the bogie 20 is positioned toward the rear of the trailer 11 (also see trailers 11a, 11b of Fig. 2) and is capable of forward and rearward slidable motion.

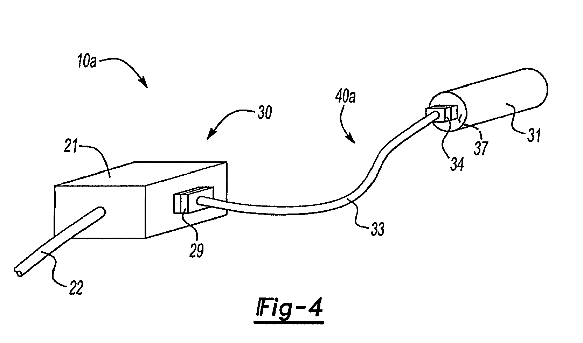

The bogie 20 slides forward and rearward by way of rails 18, which are disposed below a trailer floor 19. The ABS module 21 typically draws power (see the voltage V in Fig. 3) from the existing semi-tractor's power supply (not shown). The ABS communicates with the tractor or the trailer 11, by way of an electrical cable in cables/compressed air lines 22.

Slack is provided (as shown) in the cables/air lines 22 so as to allow for repositioning of the bogie 20 via the rails 18. In order to protect the cables/air lines 22 from debris and wear, the cables/air lines 22 are suspended from springs 23, which are attached beneath the trailer floor 19. Referring to Fig. 3, the electrical cables of the cables/air lines 22 are connected to an ABS control circuit 24, which has an on-board processor (not shown), that is disposed within the ABS module 21. Preferably, the electrical power and communication bus system 10 of the present invention is disposed within the ABS module 21.

Turning to Fig. 2, two vehicle trailers 11a, 11b, which are essentially the same, are illustrated that have, respectively, bogies 20a, 20b. As can be seen, the bogie 20a is disposed toward the front (i.e., right) of the trailer 11a, leaving a gap in the rear area 26a of the trailer 11a. On the other hand, the bogie 20b is disposed toward the rear (i.e., left) of the trailer 11b, leaving no gap in the rear area 26b of the trailer 11b.

Referring to Fig. 1 b, there is illustrated the truck/tractor 12 attached to the trailer 11. The tractor 12 is shown comprising an engine 13, a truck ABS module 21 a, the vehicle ECU 25, a truck cab compartment 17, and a set of wheels 15a,b. Associated with the tractor 12 is an electrical power and communication bus system 10' that is disposed in the ABS module 21a. The trailer 11 is shown attached to the tractor 12, which is in pneumatic and electrical communication with the bogie 20 via the cable/air lines 22. The bogie 20 is shown positioned in the area of the set of wheels 15.

Fig. 3 depicts an electrical schematic of the power and communication bus system 10 disposed within the ABS module 21. However, the communication bus system 10 could be disposed elsewhere in, on, or around the ABS module 21, and still remain within the scope and spirit of the present invention.

As mentioned above, the ABS control circuit 24 is also disposed within the ABS module 21, but illustrated in Fig. 3 in dashed lines to indicate that the ABS control circuit 24 is not necessarily comprised by the present invention. However, the ABS control circuit 24 does comprise a processor (not shown) that could be utilized by the controller 30. Continuing, incoming voltage V from the truck or the tractor (or other source) is provided, by way of electrical power wire 22a and chassis ground 22b to the ABS control circuit 24 and a bus controller 30.

The power and communication bus system 10 comprises the bus controller 30 (a.k.a., "suspension bus"), which utilizes a bus protocol, for example, industry standard LINBUS bus protocol or the SAE recommended practice J2602 version of LINBUS that currently calls for 10.4 Kbyte/second. The present invention, however, is not limited by the choice of bus protocol. The bus controller 30 includes a first high side switch electronic circuit 26 that provides a switched suspension power line 38a, a second high side switch electronic circuit 27 that communicates suspension bus power line 38b, and a communication electronic circuit 28 that communicates bus protocol signals 38c.

These bus lines 38a-38c and the ground return 22b are connected to at least one set of connectors 29 (for example, Deutsch DTM 4 pin style connector) for power and input/output communication functions. The electronic circuits 26-28 are, thus available to auxiliary systems 40 (like those shown in Figs. 4-5). These auxiliary systems 40 would be associated with, for example, the sensors 31 and the actuators 32 on the trailer bogie 20, which could be utilized, for example, to indicate the position of the trailer bogie 20 along the rails 18.

Inherently in PLC4TRUCKS, a power wire is available at each node since it is a power line carrier scheme. In contrast, basic LINBUS, for example, just provides a communication line and not a power line. In the most common applications of LINBUS on passenger cars, power is not provided on the bus since it is available practically everywhere on the automobile. Typically for trucks, tractors, and trailer, power is not readily available at various locations (e.g., at the ABS modules 21, 21a). It is, therefore, a discovery of the present invention to provide at least one of the power lines 38a,b and at least one communication line 38c at the ABS modules 21, 21a.

By utilizing the power 22a,b from the ABS module 21, the present invention requires no cables to be added to the bundle of the cables/air lines 22. Thus, the system 10 is the distribution means for providing power and information handling within the bogie 20 or truck/tractor 12. It should, however, be appreciated that the present invention is not limited to distributing power to the systems 10, 10' that is only derived from the ABS power lines 22.

The power at connectors 29 may preferably be switched lines (e.g., 38a-b) so that if a short circuit occurs, the controller 30 could disconnect power at individual lines 38a-b (thus protecting the bus controller 30) without disrupting other operations within the trailer 11. This safety feature is accomplished as a result of the electronic circuits 26-28 comprising "smart" MOSFET (metal oxide semiconductor) technology. As a result of this capability, the present invention allows the controller 30 the ability to provide fail safe operation for safety critical control devices (not shown).

For example, if for any reason the controller 30 is not satisfied with feedback signals from the LINBUS, it can simply remove power from the bus at 38a-b, at least temporarily, which would disable any control devices on the bus at 38c, without the loss of, for example, safety critical functions like those associated with brake system functions.

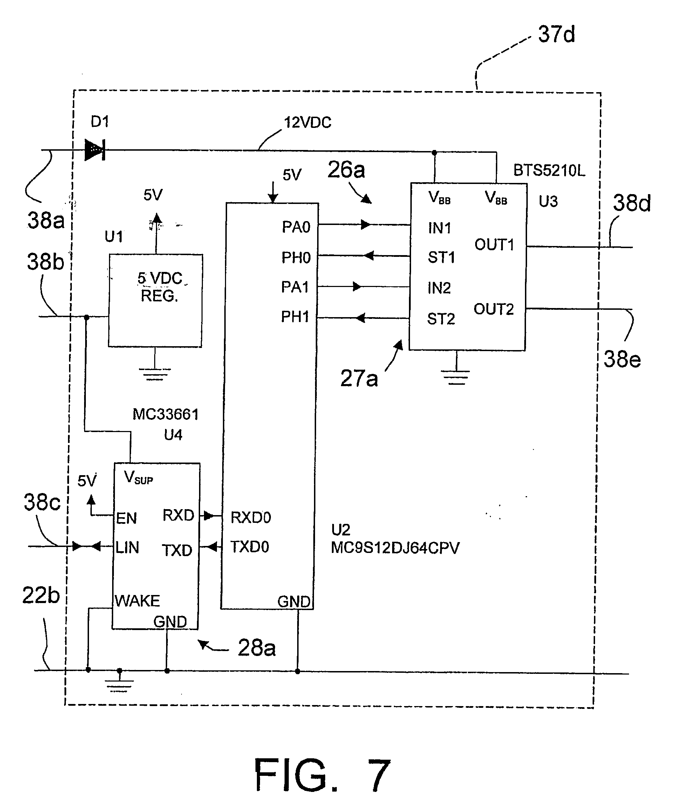

The system 10 anticipates that as dedicated integrated circuits (not shown), which would bundle bus communication functions with their inherent functionality (for example, analog-to-digital, converters, power switches, and the like), become available, there would be no need to provide a slave processor (see, for example, U2 in Fig. 7) at remote suspension nodes (for example, actuator 32).

Two separate switched power lines 38a-b are provided, one for actuation functions and one for all other electronic functions. If an electrical short is only on the actuator power line 38a, then the present invention only has to de-power the actuator power line 38a, while the present invention then can continue to utilize any information coming back from the other electronic devices 40 at line 38c.

It should be appreciated by those skilled in the art that the present invention may be practiced without requiring both power lines 38a-b, since short circuit protection and fail-safe functionality can be provided by just one switched power line, for example, line 38a.

Turning to Fig. 4, there is depicted a preferred embodiment that shows a three dimensional view of the power and communication bus system 10a, where the bus controller 30 is disposed in the ABS module 21 (or 21a) and the electrical cable of the cables/air lines 22 enters the ABS module 21. The bus power lines 38a, 38b, and the bus communication line 38c of the bus controller 30 are connected on a straight control cable 33 that electrically connects the bus connectors 29 to bus control connector 34, which is in electrical communication with the sensor 31, via a slave node 37 that will be discussed in detail later with regard to Fig. 7, and embodied as slave node 37d. The sensor 31 may be utilized in auxiliary system 40a, for example, to detect a position of a locking pin (not shown) that locks the trailer bogie 20 at a particular position on the rails 18.

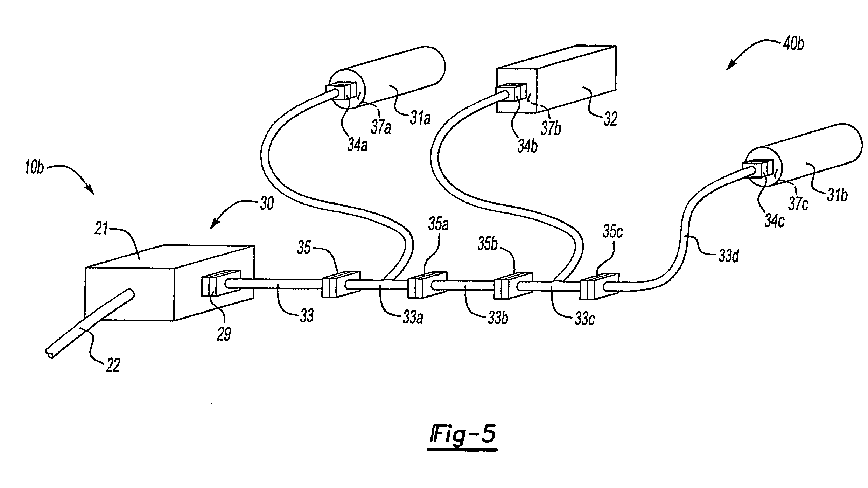

Another preferred embodiment of the present invention is depicted in Fig. 5 where an auxiliary system 40b utilizes the bus controller 30. Here, two sensors 31 a and 31 b, and an actuator 32 (via their respective slave nodes 37a, c, and b) are in electrical communication with the bus controller 30. Although the following description is directed to the interconnection of several straight and "T" shaped cables, it is within the spirit and scope of the instant invention to realize the interconnection of the auxiliary system 40 with fewer interconnecting cables (for example, one cable) than those illustrated in Fig. 5.

Returning to Fig. 5, the ABS module 21 has the first straight control cable 33 being electrically connected on one of its ends with the ABS module 21 (which could be the vehicle ABS module 21 a) via the bus connectors 29, and on the other end being connected with the "T" cable 33a via bus mating control connectors 35. In turn, the "T" cable 33b is electrically connected at a second end to the sensor 31 a by way of control cable connectors 34a, and on a third end to bus connectors 35a.

As the electrical connectivity of the auxiliary system 40b continues, another straight control cable 33b electrically connects bus interconnection connectors 35a to bus interconnection connectors 35b. In turn, a "T" cable 33c is then electrically connected on a second end to the actuator 32 by way of control cable connectors 34b, and on a third end to bus interconnection connectors 35c.

Completing the description of the electrical connection of auxiliary system 40b, a straight control cable 33d electrically connects bus interconnection connectors 35c to the sensor 31 b by way of control cable connectors 34c. The electrical connections, as illustrated, are not limited to the number, type, and combination of input devices 31 a, 31b and/or output device 32 of Fig. 5, or other auxiliary systems. Instead, various combinations of input and output devices, and auxiliary systems 40 are well within the scope and spirit of the present invention. The bus protocol signals of the embodiments of Figs. 4-5 communicate by way of the bus protocol signals 38a, 38b, and 38c of Fig. 3.

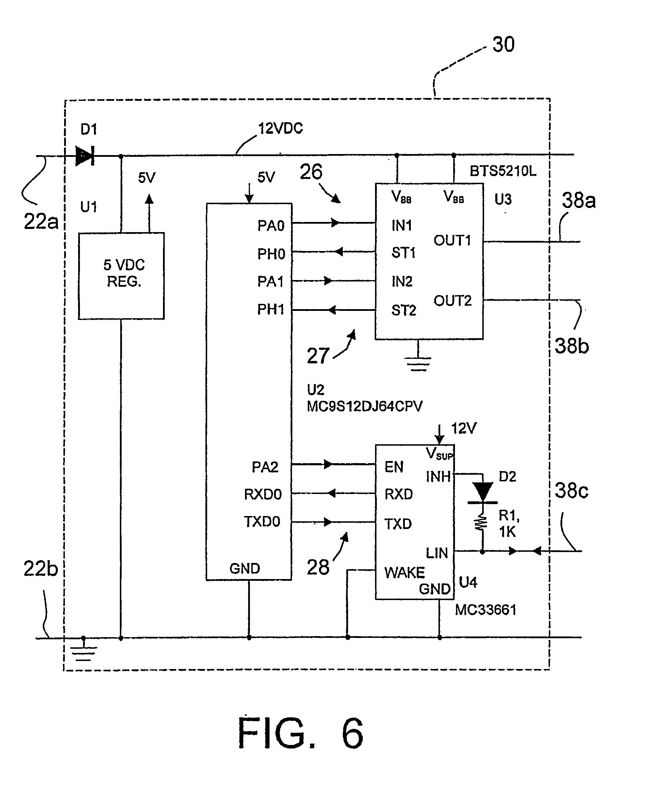

Fig. 6 illustrates a preferred implementation of the power and communication bus controller 30 of Fig. 3, where electrical power 22a, 22b (i.e., 12 volts direct current (VDC) and ground) are received within the ABS module 21 (or 21a) from the trailer 11 (or truck/tractor). It is to be understood that the power originates on the semi-tractor 12, or elsewhere on the trailer 11 or truck/tractor 12, and is supplied to the ABS module 21 through the vehicle wiring 22. First, an optional diode D1 may be provided to electrically protect the bus controller 30 in the event of a reversed battery installation or other mis-wiring on the tractor 12 or the trailer 11. A 5 VDC regulator U1, which is commonly known in the art, is provided to supply the operating voltage to various electronic components, for example, a processor U2.

The processor U2 (for example, MC9S12DJ64CPV that is available from Freescale Semiconductor, Inc.) provides processing for the bus controller 30. However, U2 may also provide processing for the ABS 24 and/or system 40, which are associated with the trailer 11 or truck/tractor 12, and still remain within the spirit and scope of the present invention. Also, the present invention is not limited by the choice of the integrated circuits controller 30 U1-U4 or slave 37d U1-U4, which may perform equally as well as those depicted in Figs. 6-7.

The communication electronic circuit 28, which comprises at least a portion of U4 (for example, MC33661), communicates bus protocol signals 38c to and from the auxiliary systems 40, where a LINBUS is being utilized. Other protocols like CANBUS may be utilized in the present invention, which is not limited by the choice of protocol. U4 (which is available from Freescale Semiconductor, Inc.) provides communication interfacing to the processor U2. Similar devices are available from Infineon Technologies AG, ST Microelectronics N. V. and other suppliers.

Typically, an outgoing signal 38c originates from the TXD0 pin on the processor U2 and is translated to LINBUS format by U4, which, in turn, transmits the outgoing bus signal 38c. Similarly, any incoming LINBUS signals 38c are communicated from U4-RXD and received at U2-RXD0.

At any time, bus operations at U4 can be turned on or off by the processor U2 via U2- PA2, which controls whether or not power is supplied by way of pin U4-INH. Power to the pin U4-INH is provided through the 1K ohm resistor R1, as suggested by the MC33661 data sheet and the SAE J2602 specification.

An implementation of the high side switch electronic circuits 26, 27, which communicate switched/protected suspension bus power signals 38a, 38b, is also shown in Fig. 6, which utilizes integrated circuit U3 (for example, BTS 5210L that is a commercially available "smart" MOS device from Infineon Technologies AG).

Basically, the U3-IN1 and IN2 input control lines, respectively, control the U3-OUT1 and OUT2 output control lines, which are essentially 12 VDC "switched" outputs, because either 0 volts or 12 VDC are presented at the outputs 38a, 38b, depending on the states of the input control lines U3-IN1 and IN2. In addition, the U3-ST1 and ST2 lines feedback output status information to U2 to assure proper operation of the bus controller 30.

As an example of a smart "protected" feedback control, if a short circuit occurs on either U3-OUT1 or U3-OUT2, then U3 initially limits electrical output current and, shortly thereafter, U3's internal temperature reaches a level which triggers an alarm condition at, respectively, U3-ST1 or ST2. U2 then switches off U3-OUT1 or U3-OUT2 as a secondary response. In effect, U3, in and of itself, limits current and also limits self heating in the event of a short circuit. In addition, if there is an alarm condition on U3-ST1 or ST2, U2 can also signal U3-IN1 or U3-IN2 to turn off the corresponding short circuited channel U3-OUT1 or U3-OUT2.

In conjunction with Fig. 7, the two separate power lines 38a, 38b of the preferred embodiment of Fig. 6 are designated suspension power 38a and suspension bus power 38b. Designating power line 38b as suspension bus power may at first appear to be unusual, in that the actual power for the bus activity is provided through R1 (see Fig. 6) to the bus protocol signal 38c. However, the bus protocol signal 38c supplies power for signals on the bus, but does not directly supply power for the devices 31, 32 at the various slave nodes 37, 37a-d.

Hence, the required 12 VDC power, which, typically, is not available elsewhere on the bogie 20 or truck/tractor, is provided by two separate electrical means 38a, 38b (via, for example, the connectors 29, wires, cables 33, etc.) In general, the suspension bus power 38b is intended to provide power to support the bus communication and processing devices (see Fig. 7, U1 and U4) at each slave node 37, 37a-d. On the other hand, suspension power 38a, for example, provides power to support the various loads 32, which are under the control of the various slave nodes 37, 37a-d on the bus.

In some cases these loads 32 may be safety critical devices, for example, power may be applied to release the bogie pins. With the master bus controller 30 having control of the suspension power 38a, the entire burden of system fail safe functionality does not have to be borne by, for example, the slave node 37. If the master bus controller 30 is not satisfied with the responses coming back from even one safety critical slave node 37, then the master 30 can simply switch off suspension power 38a. However, the master 30 does not have to shut off power to the suspension bus signal 38b, thus preserving communication capability with the slave 37.

Thus, it is a discovery of the instant invention that while the safety critical device (for, example, actuator 32) has been forced into the fail safe mode, full communication is still possible with the safety critical device 32, while other devices (for example, sensors 31, 31 a-b) are not affected.

Attention is further drawn to Fig. 7, where an implementation of an actuator slave node 37d, which may be disposed in, on, or around an actuation devices, like the actuator 32 of Fig. 5. As illustrated, there is much similarity between Fig. 6 and Fig. 7, however, the outgoing power lines 38a, 38b of Fig. 6 are the incoming power lines for Fig. 7. In this implementation, two actuators can be controlled, respectively, at 38d and 38e, by U3. Assuming that the safe mode failure for the actuators is to be unpowered and that U3 were to fail by way of a short circuit between V_{BB} and U3-OUT1, then the slave node 37d, in and of itself, cannot power down the actuator and so does not provide fail safe functionality.

However, because of the signal on U3-ST1, U2 becomes aware that there is a problem and relays this information back to the master bus controller 30 over the LINBUS 38c. In response, the master bus controller 30 shuts off power 38a, which turns off the actuator on line 38d, and returns the system 10 to safe operating conditions. The system 10 may choose to report this failure mode, for example, to the tractor or directly to an operator of the tractor, which could be via the PLC or other means available in the art.

For very critical functions, the tractor may also require a satisfactory response from independent sensor nodes (not shown) to confirm expected status before returning the system 10 to full operating mode.

It should be noted that, if there is not a requirement to preserve communications capability even after actuator power has been removed for preserving fail safe functionality, then the bus power lines 38a and 38b may be replaced by a single line. The resulting system would still allow for full short circuit protection and fail safe functionality. As noted, the only disadvantage would be that communication would not be preserved after a power interruption required by fail safe considerations.

While the above descriptive example has more or less focused on trailer applications of this concept, it would be usable on any where bundling power with communications and where power wiring is not readily available. An example might be the application of a sensor and/or actuator in the suspension area of the truck or the tractor, where power is not readily available.

It should be appreciated that the circuits of Figs. 6-7 are depicted essentially at block diagram level. One skilled in the art would recognize that various other components (e.g., resistors, capacitors, a crystal, and the like) and connections are required for a full implementation.

In accordance with the provisions of the patent statutes, the principles and modes of operation of this invention have been described and illustrated in its preferred embodiments. However, it must be understood that the invention may be practiced otherwise than specifically explained and illustrated without departing from its spirit or scope.

## Claims

1. A power and communication bus, comprising a bus controller (30) disposed in an anti-lock brake system module (21) that is disposed on a truck (12), a tractor (12), or a trailer (11), the bus controller (30) utilizing a bus protocol, wherein the bus controller (30) is capable of electrically communicating switched power, protected power, and/or the bus protocol with at least one auxiliary system (40).

2. The power communication bus of claim 1, wherein the trailer (11) has a bogie (20), where the anti-lock brake system module (21) is disposed.

3. The power and communication bus of claim 1, wherein when the bus controller (30) places the auxiliary system (40), which comprises a safety critical device, into a fail safe mode, full communication with the auxiliary system (40) is maintained.

4. A power and communication bus system (10) for a vehicle, comprising:
an anti-lock brake system module (21) disposed on a truck (12), a tractor (12), or a trailer (11);
a bus controller (30) disposed on the anti-lock brake system module (21), the bus controller (30) utilizing a bus protocol;
at least one bus connector (29) that is in electrical communication with the bus controller (30); and
at least one auxiliary system (40) in electrical communication with the bus connector (29);
wherein the bus controller (30) electrically communicates switched power, protected power, and/or the bus protocol with the auxiliary system (40).

5. The power and communication bus system (10) of claim 4, wherein the bus controller (30) is disposed in an anti-lock brake system module (21) and obtains power from the vehicle power system.

6. The power and communication bus system (10) of claim 4, wherein the bus protocol is LINBUS.

7. The power and communication bus system (10) of claim 4, wherein the bus protocol conforms to a version of LINBUS outlined in SAE recommended practice J2602.

8. The power and communication bus system (10) of claim 4, wherein the auxiliary system (40) comprises at least one actuator (32) and/or at least one sensor (31).

9. The power and communication bus system (10) of claim 4, wherein the power and communication bus system (10) communicates with the auxiliary system (40), by way of a slave node (37).

10. A truck (12), a tractor (12), or a trailer (11), comprising:
a bus controller (30) disposed in an anti-lock brake module (21) that is disposed on the truck (12), the tractor (12), or the trailer (11), the bus controller (30), utilizing a LINBUS protocol;
at least one bus connector (29) that is in electrical communication with the bus controller (30); and
at least one sensor (31) and/or actuator (32) that is in electrical communication with at least one slave node (37), which is in electrical communication with the bus connector (29);
wherein the bus controller (30) electrically communicates switched power and protected power by way of a dedicated wire (38a) with the slave node (37).

11. The truck (12), the tractor (12), or the trailer (11) of claim 10, wherein the bus controller (30) electrically communicates switched power and protected power by way of two dedicated wires (38a, 38b).

12. A vehicle trailer (11) having a bogie (20), comprising:
a bus controller (30) disposed in an anti-lock brake module (21) that is disposed on a vehicle trailer bogie (20), the bus controller utilizing a LINBUS protocol;
at least one bus connector (29), that is in electrical communication with the bus controller (30); and
at least one sensor (31) and/or actuator (32) that is in electrical communication with the bus connector (29);
wherein the bus controller (30) electrically communicates switched power and protected power by way of a dedicated wire (38a) with the sensor (31) and/or actuator (32).

13. The vehicle trailer (11) of claim 12, wherein the bus controller (30) electrically communicates switched power and protected power by way of two dedicated wires (38a, 38b).
